# EUROPÄISCHE PATENTSCHRIFT

(11) **EP 4 127 658 B1**
(45) Veröffentlichungstag und Bekanntmachung des Hinweises auf die Patenterteilung: **29.01.2025**
(21) Anmeldenummer: 21716292.4
(22) Anmeldetag: 25.03.2021
(51) Int. Cl.: G01N 21/05, G01N 21/03, G01N 21/31, G01N 21/33

(54) **OPTISCHER SENSOR ZUR DETEKTION EINES GASES, SEINE VERWENDUNG SOWIE FORTBEWEGUNGSMITTEL MIT EINEM SOLCHEN SENSOR**
OPTICAL SENSOR FOR DETECTING A GAS, USE THEREOF, AND MEANS OF TRANSPORTATION COMPRISING SUCH A SENSOR
CAPTEUR OPTIQUE POUR LA DÉTECTION D'UN GAZ, UTILISATION ASSOCIÉE, ET MOYENS DE TRANSPORT COMPRENANT UN TEL CAPTEUR

(30) Priorität: 30.03.2020 DE 102020108768
(43) Veröffentlichungstag der Anmeldung: 08.02.2023
(73) Patentinhaber: VOLKSWAGEN AG, 38440 Wolfsburg (DE)
(72) Erfinder: ZLATKOV, Branislav, 38104 Braunschweig (DE); KIEFER, Matthias, 38465 Brome (DE); VOGEL, Alexander, 38458 Velpke (DE); DJINOVIC, Zoran, 2700 Wr. Neustadt (AT)
(74) Vertreter: Gulde & Partner
(86) Internationale Anmeldenummer: PCT/EP2021/057798
(87) Internationale Veröffentlichungsnummer: WO 2021/198030

(56) Entgegenhaltungen:
- WO-A1-2004/051240
- WO-A1-99/57584
- DE-A1- 102008 001 711
- DE-A1- 102008 044 171
- JP-A- H07 198 600
- US-A- 4 228 352
- US-A- 5 604 587
- US-A1- 2017 219 479
- LAMBRECHT A ET AL: "Hollow fibers for compact infrared gas sensors", PROCEEDINGS OF SPIE, IEEE, US, vol. 6901, 7 February 2008 (2008-02-07), pages 69010V1 - 69010V11, XP002578001, ISBN: 978-1-62841-730-2, DOI: 10.1117/12.761539

## Beschreibung

Die Erfindung betrifft einen Sensor zur Detektion eines Gases oder Gasgemischs. Die Erfindung betrifft ferner Verwendungen des Sensors in mobilen Anwendungen sowie ein Fortbewegungsmittel, das einen solchen Sensor umfasst.

Sensoren zur Detektion von Gasen sind in verschiedenen Ausführungen, die auf unterschiedlichen Messprinzipien basieren, bekannt. In Abgasanlagen von Fahrzeugen werden Festelektrolytsensoren eingesetzt, deren Messprinzip auf lonenleitung beruht. Diese Sensoren weisen einen komplexen Schichtaufbau auf, umfassend Keramikschichten, Elektroden und Heizelemente. In diesen Festelektrolytsensoren kommt es an den Platinelektroden zu elektrochemischen Reaktionen und Stoffströmen, insbesondere von Diffusion von Sauerstoff durch ZrO₂-Schichten. Die hierdurch verursachten Stromänderungen werden als Sensorsignal ausgegeben und in die Gaskonzentration umgerechnet. Die Festelektrolytsensoren benötigen Edelmetalle, wie Platin oder Rhodium und sind vergleichsweise teuer in ihrer Herstellung. Zudem benötigen sie hohe Arbeitstemperaturen und sind anfällig gegen Temperaturschocks und gegenüber Wassertropfen im Abgas. Schließlich erlauben diese Sensoren nur die Messung von wenigen Gaskomponenten, nämlich NO, NH₃ und O₂.

Andere Abgassensoren, die beispielsweise in Gasthermen Einsatz finden, beruhen auf Widerstandsänderungen.

EP 2 287 591 A2 beschreibt ein Verfahren und eine Anordnung zur optischen Bestimmung der Konzentration von NO₂ beispielsweise in Abgasen von Dieselmotoren. Dabei wird Licht einer Lichtquelle so geführt, dass es das zu untersuchende Gas durchsetzt, die durchgehende Strahlung auf einen Filter mit variabler Transmissionswellenlänge fokussiert und das abgeschwächte Licht wird in Transmission gemessen und ausgewertet.

DE 40 37 431 A1 beschreibt einen optischen Sensor für die Detektion von Gaskomponenten, beispielsweise CO₂ in der Luft. Der Sensor umfasst ein Substrat, auf dem ein Lichtwellenleiter verläuft, eine darauf angeordnete dielektrische Zwischenschicht sowie eine darauf angeordnete sensitive Schicht aus Heteropolysiloxan (HPS), welches in der Lage ist, mit dem Zielmolekül zu interagieren. Der Lichtwellenleiter ist nach seiner Einkopplungsstelle zunächst einbahnig geführt, spaltet sich im weiteren Verlauf in zwei parallele Zweige (Mess- und Referenzzweig) auf, ehe er wieder zusammengeführt wird. Im Messzweig ist ein sensitiver Bereich vorgesehen, in dem keine Zwischenschicht vorhanden ist und die sensitive HPS-Schicht somit in direktem Kontakt mit dem Lichtwellenleiter steht. Das zu detektierende Gasmolekül adsorbiert an der HPS-Schicht und beeinflusst ihre optischen Eigenschaften, insbesondere ihren Brechungsindex und Absorptionskoeffizienten. Innerhalb des sensitiven Bereichs des Messzweigs erstreckt sich der evaneszente Feldanteil des durch den Lichtwellenleiter geführten Lichts in die HPS-Schicht hinein, sodass die Phasengeschwindigkeit des Lichts in Abhängigkeit von den optischen Eigenschaften der HPS-Schicht beeinflusst wird. An dem Zusammenführungspunkt von Mess- und Referenzzweig interferieren die Lichtanteile aus den beiden Leitern, sodass der Phasenunterschied in eine Intensitätsänderung umgewandelt wird. Diese wird von einem nachgeschalteten Photodetektor erfasst.

US 6 527 398 B1 beschreibt einen Sensor für die Detektion verschiedener Gaskomponenten einer zu prüfenden Gasprobe. Dies erfolgt auf Grundlage der Strahlungsabsorptionsspektroskopie. Hierfür bedient man sich eines Wellenleiters, der sich in gewickelter Form innerhalb eines Gehäuses befinden soll. Mittels eines optischen Einlasses sowie Auslasses gelangt Strahlung in und aus dem Wellenleiter. Mit Hilfe von Gaszuführungs- und Abführungsvorrichtungen wird dem Wellenleiter die Gasprobe zugeführt. Als Strahlungsquelle soll ein Laser dienen. Ein nach dem optischen Auslass angeordneter optischer Detektor empfängt die aus dem Wellenleiter austretende Strahlung zur Analyse.

CA 2 547 244 A1 behandelt einen Sensor, der auf der verteilten polarimetrischen chemischen Analyse eines optischen Wellenleiters basiert. Dafür umfasst er unter anderem einen doppelbrechenden optischen Wellenleiter, der zwischen zwei Polarisatoren angeordnet ist. Der Wellenleiter besitzt einen Längskanal, innerhalb dessen das zu vermessende Fluid strömt, sowie ein Ausbreitungsvolumen für darin einfallende Strahlung. Dieser Längskanal wird in Bezug zu dem erwähnten Ausbreitungsvolumen positioniert. Durch die stattfindende Absorption des Fluids bzw. dessen Komponenten an der Kanaloberfläche wird eine örtliche Änderung der Orientierung der Polarisationsachsen des Wellenleiters verursacht

JP H07 198600 A beschreibt ein Fourier-Transform-Mehrkomponenten-Absorptionsspektrometer. Dieses umfasst eine spiralförmige Gaszelle in Form eines schmalen Rohrs. Die Gaszelle weist an ihren beiden Enden Ein- und Auslässe auf, die zur Aufnahme und Verteilung eines Messgases dienen. Darüber hinaus verfügt die Gaszelle über lichtdurchlässige Fenster, die jeweils an einem Ende der Gaszelle angeordnet sind und über die Infrarotlicht in die Gaszelle eintritt.

LAMBRECHT et al.: "Hollow fibers for compact infrared gas sensors" offenbart optische Hohlleiterfasern, bei denen Messgas durch einen hohlen Faserkern strömt und Licht gleichzeitig in denselben Bereich geführt wird. Ein Filterphotometer mit gewickelter optischer Hohlleiterfaser umfasst eine Infrarot-Quelle an einem Ende der Hohlleiterfaser sowie einen Pyrodetektor mit einem optischen Filter an dem anderen Ende der Hohlleiterfaser. Des Weiteren sind an den beiden Enden jeweils Gasanschlüsse angeordnet.

US 4 228 352 A beschreibt eine Vorrichtung zur Messung der Konzentration von Gasen durch Strahlungsabsorption. Die Vorrichtung umfasst eine rohrförmige, helikal gewundene Messkammer. An einem Ende verfügt die Messkammer über einen Eingang für Licht, an einem anderen Ende ist ein Ausgang für die Strahlung zu einem Detektor angeordnet. Ferner verfügt die Messkammer über eine hochglänzende, reflektierende innere Oberfläche oder ist mit mehreren Schichten eines Materials vakuumbeschichtet.

DE 10 2008 001711 A1 beschreibt eine Sensoranordnung umfassend ein Innenelement in einem Reflexionsgehäuse mit einer Vielzahl von Reflexionsmodulen. Das Reflexionsgehäuse ist als ein langgestreckter, schraubenförmiger Hohlzylinder ausgebildet. Die Sensoranordnung weist an einem ersten Ende des Reflexionsgehäuses eine Emissionseinheit zur Aussendung von Strahlung und an einem zweiten Ende des Reflexionsgehäuses eine Detektionseinheit zum Empfang der Strahlung auf.

US 5 604 587 A beschreibt eine Zelle zur Verwendung bei der Messung der chemischen Eigenschaften von wässrigen Proben durch Raman-Spektroskopie. Eine Probe der Flüssigkeit wird dabei in einen kapillarförmigen Lichtwellenleiter geleitet. Anregungslicht wird axial in die Flüssigkeit an einem Ende des Wellenleiters übertragen. Das Anregungslicht wird durch Reflexion an der reflektierenden Oberfläche über die Länge des Wellenleiters übertragen, wodurch die Flüssigkeit Raman-Spektren aussendet.

WO 2004/051240 A1 offenbart einen Gassensor umfassend einen Körper, auf dem eine optische Quelle und ein für das Licht der Quelle empfindliches Detektormittel angebracht ist.

Der Körper umfasst ferner einen Kanal in Form einer längliche Rille, die einen gefalteten optischen Pfad für Licht von der Quelle definiert.

WO 99/57584 A1 beschreibt einen optischen Wellenleiter mit flüssigem Kern für die Absorptionsspektroskopie. Der Wellenleiter besteht aus einem Rohrstück und einem Flüssigkeitskern, der in dem Rohrstück eingeschlossen ist.

DE 10 2008 044171 A1 beschreibt einen Sensor zur Messung der Konzentration eines Bestandteils eines Abgases, wobei der Sensor eine Lichtquelle, eine Messzelle und einen optischen Detektor umfasst. Der Sensor weist ein topfförmiges Gehäuse auf, innerhalb dessen sich eine zylindrische Messzelle befindet. Die Messzelle verfügt ferner über ein Fenster aus Quarzglas sowie einen Spiegel. Auf der Seite des Fensters weist die Messzelle eine Lichtquelle und einen optischen Detektor auf.

Der Erfindung liegt nun die Aufgabe zugrunde, einen Sensor für die qualitative und bevorzugt auch quantitative Detektion von Gaskomponenten bereitzustellen, der die genannten Nachteile des Stands der Technik zumindest teilweise überwindet. Der Sensor sollte insbesondere einfach und kostengünstig aufgebaut sein, in aggressiven Umgebungen wie verbrennungsmotorischen Abgasanlagen einsetzbar sein und zuverlässige Messergebnisse liefern. Idealerweise sollte der Sensor für unterschiedliche Gaskomponenten sensitiv sein, das heißt, mehrere Komponenten eines Gasgemischs qualitativ und bevorzugt auch quantitativ nebeneinander messen können.

Die Aufgaben werden ganz oder zumindest teilweise durch einen Sensor sowie ein Fortbewegungsmittel mit einem solchen mit den Merkmalen der unabhängigen Ansprüche gelöst. Weitere bevorzugte Ausgestaltungen der Erfindung ergeben sich aus den übrigen, in den Unteransprüchen genannten Merkmalen.

Der erfindungsgemäße Sensor zur Detektion eines Gases gemäß Anspruch 1 umfasst eine Kapillare, die spiralförmig (helikal) verläuft und die eine Kapillarwand aufweist, welche einen spiralförmig (helikalen) verlaufenden Hohlraum umschließt. Die Kapillare, insbesondere ihre Kapillarwand, ist ausgebildet, ein Austreten von elektromagnetischer Strahlung, die im Inneren der Kapillare strömt, zu unterdrücken, also zumindest entgegenzuwirken oder gänzlich zu verhindern. Ferner sind an einem ersten Ende der Kapillare ein Gaseinlass und an einem zweiten Ende der Kapillare ein Gasauslass angeordnet, sodass der Hohlraum mit dem zu messenden Gas befüllbar und/oder von einem solchen durchströmbar ist. Der Sensor umfasst ferner eine optische Einkopplungsstelle, die ausgebildet ist, eine elektromagnetische Strahlung in den Hohlraum der Kapillare einzukoppeln, und eine optische Auskopplungsstelle, die ausgebildet ist, die elektromagnetische Strahlung aus der Kapillare auszukoppeln. Hierbei können die optische Ein- und die Auskopplungsstelle gemeinsam an dem ersten oder zweiten Ende der Kapillare oder separat voneinander an den gegenüberliegenden Enden der Kapillare ausgebildet sein. Die Kapillare ist durch einen ein kompaktes Bauteil durchsetzenden, spiralförmig verlaufenden Kanal gebildet und das Bauteil ist integral einstückig ausgebildet.

Ein in dieser Art ausgestalteter Sensor stellt somit eine Messzelle oder Küvette bereit, die mit dem zu vermessenden Gas oder Gasgemisch befüllt werden kann und die Detektion des Gases über die Abschwächung der Strahlungsintensität aufgrund von Absorption durch die Gasmoleküle erlaubt. Dabei lässt der Energiebereich (Spektralbereich) der Absorption einen Rückschluss auf die Art des Gases zu, also eine qualitative Bestimmung, während die Stärke der Absorption eine Aussage über die Konzentration des jeweiligen Gases erlaubt, also eine quantitative Bestimmung. Erfindungsgemäß strömen sowohl das zu vermessende Gas als auch die Messstrahlung durch die spiralförmige Kapillare innerhalb ihres Hohlraumes. Durch die Ausführung der Messzelle in Form einer spiralförmigen Kapillare wird ein besonders langer Lichtweg innerhalb des Gases und damit gemäß dem Lambert-Beer'schen-Gesetz eine besonders starke Extinktion ermöglicht. Hierdurch wird die Messgenauigkeit sehr hoch, sodass sich auch Gase in geringen Konzentrationen zuverlässig nachweisen lassen.

Im Rahmen der vorliegenden Anmeldung wird unter dem Begriff "spiralförmig" ein helikaler, wendelförmiger oder schraublinienförmiger Verlauf verstanden, d.h. ein Verlauf um einen Zylindermantel. Dabei weist der Verlauf vorzugsweise eine im Wesentlichen konstante Steigung und einen im Wesentlichen konstanten Krümmungsradius auf.

Nach einer vorteilhaften Ausführung umfasst der Sensor eine Gaskonditionierungseinheit zur Vorreinigung des der Kapillare zuzuführenden Gases. Die Gaskonditionierungseinheit ermöglicht eine Vorreinigung des dem Sensor zugeführten Gases. Beispielsweise können Bestandteile, die nicht Gegenstand (Target) der Detektion sind, aus dem Messgas entfernt oder vermindert werden. Insbesondere betrifft dies partikuläre oder gasförmige Bestandteile, die eine Störung der Messgenauigkeit verursachen könnten oder deren Korrosivität zu einer Beeinträchtigung des Sensors führen könnten. Diese Ausgestaltung ermöglicht den Einsatz des Sensors in aggressiven Umgebungen, beispielsweise in Abgaskanälen von Fahrzeugen, etwa von verbrennungsmotorisch betrieben Fahrzeugen.

Die Gaskonditionierungseinheit kann unterschiedliche Ausführungen aufweisen. Beispielsweise kann sie einen vom Gas durchströmbaren Filter zur Zurückhaltung partikulärer Bestandteile umfassen. Alternativ oder zusätzlich kann sie bestimmte Komponenten im Wege einer chemischen Reaktion, beispielsweise einer katalysierten Reaktion oder einer Verbrennung aus dem Messgas entfernen oder in eine zu messende Zielverbindung umsetzen.

Vorzugsweise ist auf einer Innenseite oder Außenseite der Kapillarwand, jeweils dem Hohlraum zugewandt, eine reflektierende Oberfläche vorhanden, wodurch ein Austreten von elektromagnetischer Strahlung unterdrückt wird. Der Begriff "reflektierende Oberfläche" ist im Rahmen der Erfindung breit zu verstehen und umfasst sämtliche Konstellationen, die ein Austreten der elektromagnetischen Strahlung aus der Kapillare verhindern oder zumindest gering halten. Insbesondere wird im Rahmen der vorliegenden Erfindung unter einer reflektierenden Oberfläche eine Oberfläche verstanden, bei der mindestens 90 %, vorzugsweise mindesten 95 %, der orthogonal auf die Oberfläche treffenden Strahlung zurückgeworfen werden. Da der Reflexionsgrad abhängig von der Wellenlänge der elektromagnetischen Strahlung ist, bezieht sich dieses Verständnis auf die entsprechende hier eingesetzte elektromagnetische Strahlung. Die reflektierende Oberfläche kann einerseits eine für die jeweilige elektromagnetische Strahlung undurchlässige, spiegelnde Oberfläche umfassen, die insbesondere eine niedrige Rauheit aufweist (Rauheit < ½ λ). Beispielsweise kann die spiegelnde Oberfläche aus einer metallischen Schicht bestehen, wobei die Art des Metalls von dem Spektralbereich der verwendeten Strahlung abhängt. Eine solche spiegelnde Oberfläche kann auf der Innenseite der Kapillarwand angeordnet sein. Bei transparentem Kapillarmaterial besteht zudem die Möglichkeit, dass die Kapillare eine metallische Schicht umfasst, die auf der Außenseite der Kapillarwand angeordnet ist, wobei die reflektierende Oberfläche jeweils dem Hohlraum zugewandt ist.

Entsprechend einer weiteren bevorzugten Ausführung handelt es sich bei der reflektierenden Oberfläche um einen Materialschicht, die auf der Außenseite der Kapillare angeordnet ist und deren Brechungsindex kleiner als der des Materials der in diesem Fall transparenten Kapillarwand ist, sodass es an der Grenzfläche zwischen Kapillarwand und äußerer Materialschicht zu einer Totalreflexion kommt.

Erfindungsgemäß wird die Kapillare durch ein Bauteil dargestellt, dessen ansonsten kompakter (nicht hohler) Körper einen spiralförmig (helikal) verlaufenden Kanal aufweist, der das Bauteil durchsetzt und somit den spiralförmigen (helikalen) Hohlraum ausbildet. Dieses Kernbauteil kann eine beliebige Grundfläche (bezüglich einer Achse der Spirale) aufweisen und beispielsweise kreisförmig sein und somit als dreidimensionalen Körper einen Zylinder darstellen oder bei einer rechteckigen Grundfläche entsprechend einen Quader bilden. Das Bauteil ist integral einstückig ausgebildet, d.h. der Grundkörper des Bauteils ist nicht gefügt, sondern besteht aus einem einzigen, nahtfreien Stück. Der in diesem Bauteil befindliche spiralförmige Kanal umfasst ebenfalls die optische Ein- und Auskopplungsstelle sowie den Ein- und Auslass für das zu prüfende Gasgemisch. Je nach Einsatzgebiet besteht optional die Möglichkeit einer Behandlung der Oberfläche (=Kapillarwand) des spiralförmigen Hohlraums durch Verfahren wie Passivierung, Verglasung, Emaillierung oder andere Maßnahmen zur Erzeugung einer gewissen chemischen Beständigkeit oder Hitzebeständigkeit.

Für die Kapillare, genauer gesagt für die Kapillarwand, in Betracht kommende Materialien stellen unter anderem Metalle oder Metalllegierungen dar, insbesondere rostfreier Stahl; Gläser, insbesondere Quarzglas; Kunststoffe oder Keramiken.

Auf der Innenseite der Kapillarwand kann eine Beschichtung aus einem optisch transparenten Material (bezüglich der verwendeten Strahlung) aufgebracht werden. Bei dem Schichtmaterial kann es sich unter anderem um eine Schicht aus einem Glas, Siliziumdioxid (SiOz) oder Aluminiumoxid (Al₂O₃) handeln. Diese innere Beschichtung dient als Schutz vor Oberflächenveränderungen des metallischen Hohlraums. Zusätzlich besteht die Möglichkeit, dass die Innenfläche der Kapillarwand durch Anwendung eines Polierverfahrens einen spiegelgleichen Glanzgrad aufweist. Dies verbessert wiederum die Reflexion der eintretenden Strahlung innerhalb der Kapillare.

Grundsätzlich ist die Länge der Kapillare im Rahmen der Erfindung nicht auf bestimmte Maße beschränkt. Je Länger die Kapillare, desto länger ist der Weg der Strahlung durch das Messgas, sodass die Genauigkeit der Messung zunimmt. In bevorzugten Ausführungen liegt die Länge der (gestreckten, nicht gewickelten) Kapillare beispielsweise im Bereich von 5 cm bis100 cm, bevorzugt 10 cm bis 80 cm. Der Außendurchmesser liegt bevorzugt im Bereich von Mikro- bis Millimetern, insbesondere 400 µm bis 1100 µm, bevorzugt 500 µm bis 1000 µm. Der lichte Innendurchmesser der Kapillare, also der Durchmesser des Hohlraums, liegt ebenfalls typischerweise im Bereich von Mikro- bis Millimetern, beispielsweise 100 µm bis 1000 µm, bevorzugt 400 µm bis 900 µm.

In einem nicht beanspruchten Beispiel umfasst der Sensor ferner einen Trägerkern, um welchen die Kapillare in Form einer Spirale gewickelt ist. Auf diese Weise wird die Wicklung der Kapillare stabilisiert. Beispielsweise ist der Trägerkern zylindrisch ausgebildet, wobei die Kapillare spiralförmig um den Zylinder gewickelt ist.

Gemäß einer bevorzugten Ausgestaltung der Erfindung, nachfolgend auch als Reflexionsmodus bezeichnet, sind die optische Einkopplungsstelle und Auskopplungsstelle gemeinsam an einem der beiden Enden der Kapillare ausgebildet. Dabei ist an dem gegenüberliegenden Ende der Kapillare ein Spiegel angeordnet, der die auftreffende elektromagnetische Strahlung in Richtung der Einkopplungsstelle zurück reflektiert. Mit anderen Worten durchsetzt die eingekoppelte Strahlung die Kapillare von der Einkopplungsstelle bis zum Spiegel und strömt von dort in entgegengesetzter Richtung zurück zur Einkopplungsstelle, wo sie aus der Kapillare ausgekoppelt wird. Vorteil dieser Ausführung ist, dass die Weglänge der Strahlung im Messgas verdoppelt wird und damit die Sensorempfindlichkeit noch weiter erhöht wird. Bevorzugt sind hier die Einkopplungsstelle und die Auskopplungsstelle als ein einziges Bauteil ausgebildet.

Gemäß einer weiteren bevorzugten Ausgestaltung der Erfindung, nachfolgend auch als Transmissionsmodus bezeichnet, sind die optische Einkopplungsstelle und Auskopplungsstelle nicht gemeinsam an einem der beiden Enden der Kapillare ausgebildet. Sie befinden sich hingegen separat an den beiden gegenüberliegenden Ende der Kapillare. Somit ist an dem gegenüberliegenden Ende der optischen Einkopplungsstelle der Kapillare kein reflektierender Spiegel angeordnet, sondern die optische Auskopplungsstelle. Mit anderen Worten durchsetzt die eingekoppelte Strahlung die Kapillare von der Einkopplungsstelle bis zur Auskopplungsstelle, wo sie aus der Kapillare ausgekoppelt wird. Vorteil dieser Ausführung ist, dass konstruktive Umsetzung, insbesondere bezügliche der separaten Kopplungsstellen für die Strahlung mit weniger Aufwand verbunden ist.

Der Sensor umfasst ferner bevorzugt eine Lichtquelle zur Emission der elektromagnetischen Strahlung, wobei die Strahlung über einen Lichtleiter mit der optischen Einkopplungsstelle verbunden ist. Die Lichtquelle kann eine polychromatische oder monochromatische Lichtquelle sein. Vorzugsweise ist sie als polychromatische Lichtquelle ausgebildet, das heißt, sie emittiert Licht über einen gewissen Wellenlängenbereich, wodurch die Detektion mehrerer Gaskomponenten ermöglicht wird. Der emittierte Spektralbereich, das heißt die Energie der emittierten Strahlung, ist im Rahmen der Erfindung grundsätzlich nicht beschränkt. Er kann insbesondere ultraviolette Strahlung, visuelle Strahlung und/oder Nah- und Fern-Infrarotstrahlung umfassen. Das optische Gasmessverfahren wird ermöglicht durch die Eigenschaft von Molekülen, elektromagnetische Strahlung einer oder mehrerer genau definierten Wellenlängen λ, zu absorbieren oder auch zu emittieren. Die spektrale Lage dieser Absorption bzw. Emission charakterisiert dabei die jeweilige Gasart und ist im Vergleich zu anderen gasanalytischen Messverfahren extrem selektiv. Aufgrund dessen sind im Rahmen der Erfindung besonders bevorzugt der ultraviolette und visuelle Bereich, da in diesem Spektralbereich die Absorption im Gasmolekül durch Elektronenübergänge der Valenzelektronen verursacht wird, die mit vergleichsweise starken Intensitätsänderungen im Absorptionsspektrum einhergehen. Für die Messung von Absorptionsspektren im UV-Vis-Bereich stehen kostengünstige und robuste Detektoren zur Verfügung.

Im Falle der Verwendung monochromatischer Lichtquellen sind entsprechende Strahlungsquellen zu wählen, deren Emissionswellenlänge im Wellenbereich der zu detektierenden Gase liegt. Geeignete monochromatische Lichtquellen sind etwa Laser oder LEDs.

Gemäß vorteilhafter Ausführungen des erfindungsgemäßen Sensors werden die in die Kapillare eingestrahlte elektromagnetische Strahlung und die von dort austretende (abgeschwächte) elektromagnetische Strahlung zumindest abschnittsweise über einen gemeinsamen Lichtleiter geleitet, insbesondere gegenläufig. Hierdurch wird nicht nur Material des Lichtleiters, beispielsweise Glasfaserleiter, eingespart, sondern die Kompaktheit des Sensors erhöht. Diese Ausführung eignet sich besonders vorteilhaft in Kombination mit der gemeinsamen Anordnung von Ein- und Auskopplungsstelle an einem Ende der Kapillare (Reflexionsmodus).

Der Sensor umfasst bevorzugt ferner zumindest eine für die elektromagnetische Strahlung empfindliche Detektionseinheit zur Umwandlung der elektromagnetischen Strahlung in ein elektrisches Signal, wobei die Detektionseinheit über einen Lichtleiter mit der optischen Auskopplungsstelle verbunden ist. Eine solche Detektionseinheit erlaubt in besonders einfacher Weise die Erfassung der eintreffenden abgeschwächten Strahlung. Beispielsweise kann als Detektionseinheit eine Fotodiode eingesetzt werden, die einen Stromfluss proportional zur einfallenden Lichtintensität erzeugt.

Vorzugsweise ist zwischen der Detektionseinheit und der optischen Auskopplungsstelle ein optischer Filter angeordnet, der ausgebildet ist, einen vorbestimmten spektralen Bereich selektiv passieren zu lassen und die übrigen Spektralbereiche auszublenden. Ein solcher Filter wird auch als Bandpassfilter bezeichnet. Der optische Filter erlaubt, dass nur ein solcher Spektralbereich durchgelassen wird, in dem eine charakteristische Absorptionsbande des zu detektierenden Gases vorliegt. Dies ermöglicht den Einsatz unspezifischer Detektionseinheiten, da diese aufgrund des vorgeschalteten optischen Filters ausschließlich mit charakteristischer Strahlung beaufschlagt werden. Sobald eine solche Detektionseinheit eine Intensitätsänderung einfallender Strahlung registriert, muss dieses Ereignis somit durch die Gegenwart einer Gaskomponente verursacht sein, die in diesem Spektralbereich absorbiert. Durch die Kombination mit einem Bandpassfilter ist die nachgeschaltete Detektionseinheit somit, ausgelegt, selektiv eine bestimmte Gaskomponente zu detektieren.

Gemäß einer besonders vorteilhaften Ausführung der Erfindung umfasst der Sensor eine Mehrzahl von Detektionseinheiten mit jeweils einem vorgeschalten optischen Filter, wobei letztere ausgebildet sind, unterschiedliche vorbestimmte spektrale Bereiche selektiv passieren zu lassen. Auf diese Weise lassen sich unterschiedliche Gaskomponenten in einem Gasgemisch nebeneinander nachweisen.

Abhängig vom Einsatzgebiet kann der optische Sensor weitere Komponenten umfassen. Beispielsweise kann sie Fördermittel zur Beförderung des Gases in den und aus dem Sensor, Ventile und andere Elemente umfassen.

Ein weiterer Aspekt der vorliegenden Erfindung betrifft gemäß Anspruch 12 die Verwendung des erfindungsgemäßen Sensors in einem Fortbewegungsmittel, insbesondere in einem Abgastrakt und/oder einem Innenraum des Fortbewegungsmittels und/oder innerhalb eines Brennstoffzellensystems.

Das Fortbewegungsmittel kann straßengebundene Fahrzeuge, Wasserfahrzeuge (Schiffe) oder Flugzeuge jeweils zum Transport von Personen oder Gütern umfassen, beispielsweise Personen- oder Lastkraftfahrzeige. Ferner kann das Fortbewegungsmittel unterschiedliche Antriebsquellen, insbesondere mit Diesel, Benzin oder Gas betriebenen Verbrennungsmotoren, Elektromotoren, welche ihre elektrische Energie durch eine Batterie und/oder eine Brennstoffzelle beziehen, oder beliebige hybride Kombinationen von diesen umfassen.

Sofern der erfindungsgemäße Sensor innerhalb eines Abgastrakts verwendet wird, dient er insbesondere der Detektion von Abgaskomponenten des Verbrennungsmotors, beispielsweise von Sauerstoff, Kohlenwasserstoffen, Stickoxiden, Kohlenmonoxid, Ammoniak; oder von Abgaskomponenten der Brennstoffzelle, insbesondere Wasserstoff; sowie der Temperatur des Abgases. Es können auch mehrere erfindungsgemäße Messvorrichtungen an unterschiedlichen Positionen des Abgastrakts verbaut werden.

Bei Verwendung in einem Innenraum Fortbewegungsmittels kommt insbesondere ein Fahrgastinnenraum oder ein Frachtraum in Frage. Bei dieser Anwendung kann der Sensor insbesondere der Überwachung der Luftqualität zum gesundheitlichen Schutz oder dem Komfort der Fahrzeuginsassen dienen. Zudem kann im Frachtraum ein unerwünschtes Austreten von Gasen des Frachtguts überwacht werden. Es können auch hier mehrere erfindungsgemäße Sensoren an unterschiedlichen Positionen des Innenraums verbaut werden.

Sofern der Sensor in einem Brennstoffzellensystem oder in einer Peripherie eines solchen eingesetzt wird, ist er insbesondere zur Detektion von Wasserstoff ausgebildet und kann einerseits der Steuerung der Brennstoffzelle dienen und andererseits der Detektion von Leckagen oder Undichtigkeiten des Systems.

Die Erfindung betrifft weiterhin ein Fortbewegungsmittel, das mindestens einen erfindungsgemäßen Sensor umfasst, insbesondere in einem Abgastrakt und/oder einem Innenraum und/oder innerhalb eines Brennstoffzellensystems des Fortbewegungsmittels.

In einer Ausgestaltung umfasst das Fortbewegungsmittel einen Verbrennungsmotor, eine daran angeschlossene Abgasanlage mit einem Abgaskanal und mindestens einer darin angeordneten Abgasreinigungskomponente, wobei in dem Abgaskanal mindestens ein Sensor zu der Detektion eines Gases gemäß der Erfindung in Kontakt mit dem Abgas des Verbrennungsmotors angeordnet ist. Vorzugsweise ist zumindest die Messzelle des Sensors in Kontakt mit dem Abgas angeordnet, während die übrigen Komponenten der Messvorrichtung, wie die optoelektronische Einheit oder elektronische Steuer- und Auswerteeinheit, außerhalb des Abgaskanals angeordnet sind.

In einer weiteren Ausgestaltung umfasst das Fortbewegungsmittel ein Brennstoffzellensystem, wobei der mindestens eine Sensor innerhalb des Brennstoffzellensystems oder einer Peripherie desselben angeordnet ist. Beispielsweise kann der Sensor in einem Abgaskanal der Brennstoffzelle, in einem Wasserstoffspeicher oder einem diesen umgebenden Bereich, in einer wasserstoffführenden Komponente oder einem diese umgebenden Bereich und/oder innerhalb eines Innenraums des Fortbewegungsmittels angeordnet sein. Auf diese Weise können in diesen Bereichen beispielsweise Leckagen des Brennstoffs, insbesondere Wasserstoff, aus dem System jederzeit überwacht und kontrolliert werden oder der Sensor kann der Steuerung des Betriebs der Brennstoffzelle dienen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen schematischen Aufbau eines Sensors gemäß einer nicht erfindungsgemäßen Ausgestaltung (Reflexionsmodus)
- Figur 2a: eine schematische Querschnittsansicht der Kapillare eines nicht erfindungsgemäßen Sensors in einer ersten Ausführung;
- Figur 2b: eine schematische Querschnittsansicht der Kapillare eines nicht erfindungsgemäßen Sensors in einer zweiten Ausführung;
- Figur 2c: eine schematische Querschnittsansicht der Kapillare eines nicht erfindungsgemäßen Sensors in einer dritten Ausführung;
- Figur 3: eine schematische Ansicht der Kapillare eines erfindungsgemäßen Sensors;

- Figur 4: einen schematischen Aufbau eines Sensors gemäß einer Ausgestaltung der Erfindung (Transmissionsmodus);
- Figur 5: Absorptionsspektren von NO (a, b), NO₂ (c) sowie NH₃ (d);
- Figur 6: einen schematischen Aufbau eines Sensors inklusive Gaskonditionierungseinheit gemäß einer Ausgestaltung der Erfindung, und
- Figur 7: eine schematische Darstellung eines Fahrzeugs mit Sensoren gemäß der Erfindung.

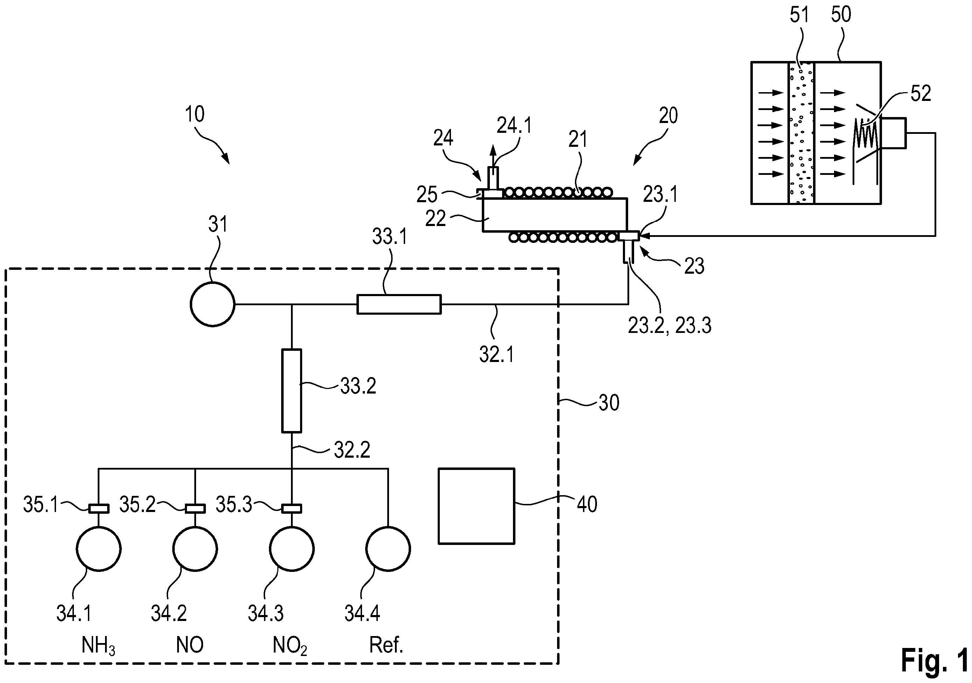

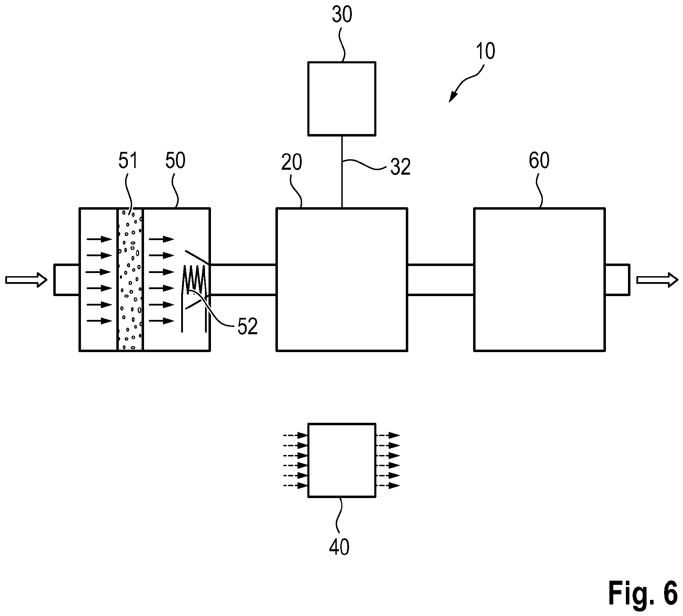

Figur 1 zeigt eine Prinzipdarstellung eines optischen Sensors gemäß einer nicht erfindungsgemäßen Ausführung (im Reflexionsmodus). Der insgesamt mit 10 bezeichnete optische Sensor umfasst als grundsätzliche Baugruppe eine Messzelle 20 sowie eine optoelektronische Einheit 30, wobei eine Steuer- und Auswerteeinheit 40 eigenständig oder wie hier in der optoelektronischen Einheit 30 integriert sein kann. Der Sensor kann ferner eine Gaskonditionierungseinheit 50 umfassen (s. ebenfalls Figur 6).

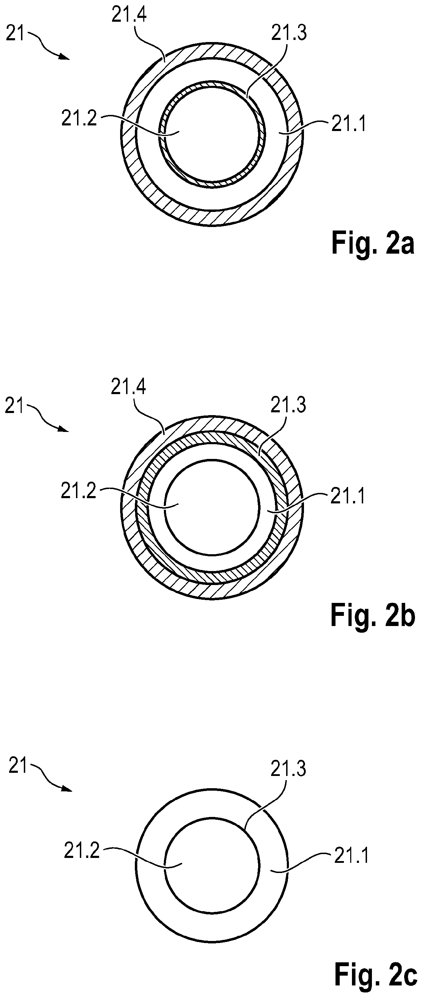

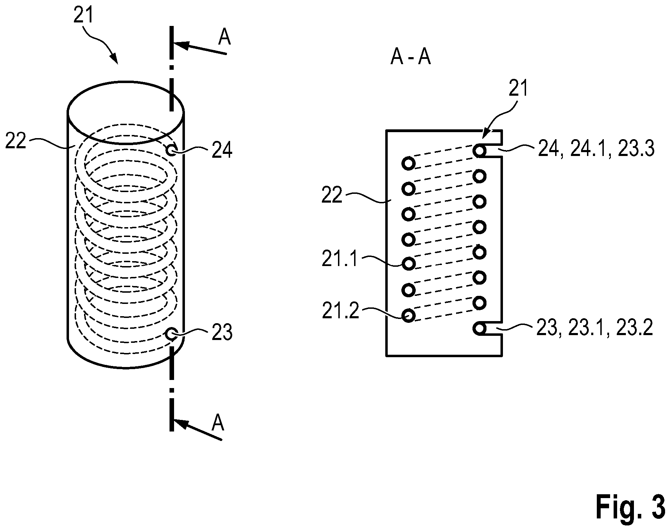

Kernstück der Messzelle 20 ist eine Kapillare 21, die spiralförmig um einen beispielsweise zylindrischen Trägerkern 22 gewickelt ist. Dabei ist in Figur 1 die Messzelle 20 in einer Schnittdarstellung längs der Wicklung der Kapillare 21 gezeigt. Figuren 2a bis 2c zeigen verschiedene nicht erfindungsgemäßen Ausführungsformen spiralförmig gewickelter, rohrförmiger Kapillaren 21 in Querschnittsansicht. Figur 3 zeigt eine erfindungsgemäße Ausführung der Kapillare in Form eines massiven Bauteils. Die Kapillaren 21 weisen jeweils eine Kapillarwand 21.1 auf, welche einen Hohlraum 21.2 umschließt. Entscheidend ist die Eignung der Kapillare, ein Austreten der elektromagnetischen Strahlung zu unterdrücken und einen möglichst hohen Strahlungsanteil innerhalb der Kapillare zu halten, sodass er mit dem darin vorhandenen Messgas in Wechselwirkung treten kann.

Die Kapillare 21 weist ein erstes und ein zweites Ende auf. Wie in Figur 1 dargestellt, ist an dem ersten Ende (unten rechts in der Darstellung) ein erstes Anschlusselement 23 angeordnet, das im vorliegenden Beispiel als ein T-Stück ausgebildet ist. Das Anschlusselement 23 weist einerseits einen Gaseinlass 23.1 zur Zuführung des zu vermessenden Gases oder Gasgemischs auf. Ferner weist das Anschlusselement 23 eine optische Einkopplungsstelle 23.2 auf, über die eine elektromagnetische Strahlung in den Hohlraum 21.2 der Kapillare 21 eingekoppelt werden kann. An dem zweiten Ende der Kapillare 21 (links oben in der Darstellung) ist ein zweites Anschlusselement 24 angeordnet, das hier ebenfalls die Gestalt eines T-Stücks aufweist. Das zweite Anschlusselement 24 weist einerseits einen Gasauslass 24.1 auf, aus dem das zu vermessende Gas aus dem Hohlraum der Kapillare 21 ausgeleitet werden kann. Ferner ist in der hier gezeigten Ausführungsform (Reflexionsmodus) an dem zweiten Anschlusselement 24 ein Spiegel 25 angeordnet. Dabei ist der Spiegel 25 so angeordnet, dass die über die optische Einkopplungsstelle 23.2 eingekoppelte elektromagnetische Strahlung bei Auftreffen auf den Spiegel 25 zurück in Richtung der Einkopplungsstelle 23.2 reflektiert wird. Aufgrund dieser Ausgestaltung fungiert der entsprechende Zugang des ersten Anschlusselements 23 gleichzeitig als optische Einkopplungsstelle 23.2 als auch als optische Auskopplungsstelle 23.3. In einer alternativen, hier nicht gezeigten Ausführung ist anstelle des Spiegels 25 die optische Auskopplungsstelle 23.3 angeordnet (Transmissionsmodus).

Die optoelektronische Einheit 30 weist eine Lichtquelle 31 auf, die als eine polychromatische Lichtquelle ausgebildet ist, beispielsweise eine (spezielle) LED, Glüh- oder Halogenlampe. Im vorliegenden Beispiel emittiert die Lichtquelle 31 Licht im Bereich der ultravioletten bis visuellen Strahlung. Die Strahlung der Lichtquelle 31 wird über einen ersten Lichtleiter 32.1, insbesondere eine Glasfaser, zu der optischen Einkopplungsstelle 23.2 der Messzelle 20 geleitet.

Ferner weist die optoelektronische Einheit 30 eine Anzahl von hier vier Detektionseinheiten 34 auf, die vorzugsweise als Fotodioden ausgebildet sind. Die Detektionseinheiten 34 sind über einen zweiten Lichtleiter 32.2, der von dem ersten Lichtleiter 32.1 abzweigt, mit der optischen Auskopplungsstelle 23.3 verbunden. Die Zusammenführung des ersten und zweiten Lichtleiters 32.1, 32.2, wird über einen 2x1-Koppler 33.1 vermittelt. Ferner ist in dem zweiten Lichtleiter 32.2 ein zweiter Koppler nämlich ein 1x4-Koppler 33.2 angeordnet, der eine Aufspaltung des zweiten Lichtleiters 32.2 in vier parallele Leitungsabschnitte vornimmt, welche zu den entsprechenden Detektionseinheiten 34.1, 34.2, 34.3 und 34.4 führen.

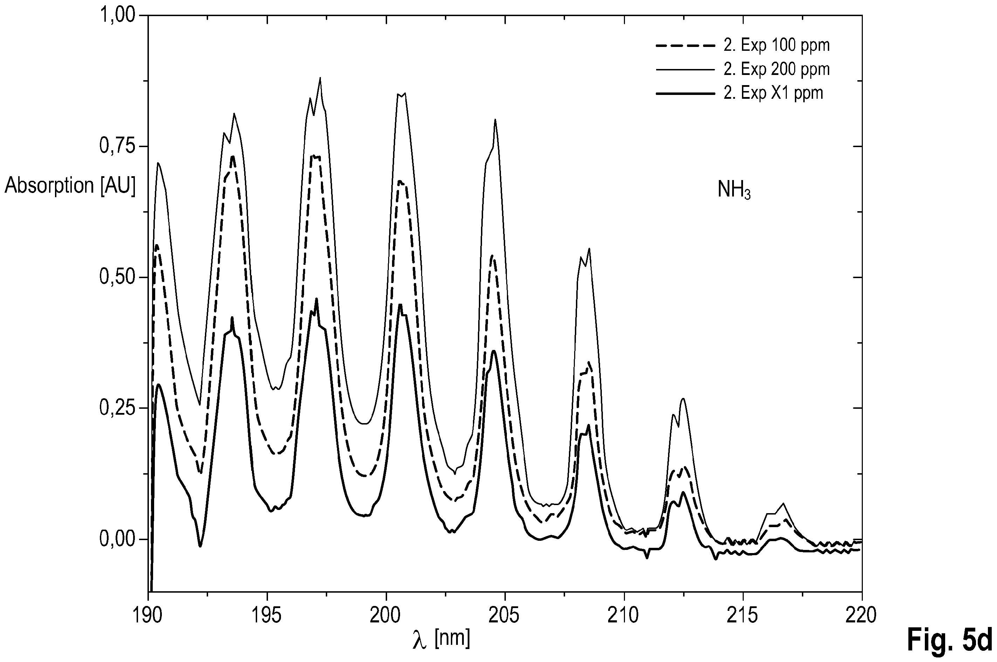

Der ersten Detektionseinheit 34.1 ist dabei ferner ein erster optischer Filter 35.1 vorgeschaltet, der zwischen der ersten Detektionseinheit 34.1 und der optischen Auskopplungsstelle 23.2 angeordnet ist. Im vorliegenden Beispiel handelt es sich bei dem ersten optischen Filter 35.1 um einen Bandpassfilter, beispielsweise einen Bandpass-Interferenzfilter, der Strahlung in einem Spektralbereich von 185 bis 192 nm oder von 192 bis 195 nm oder von 195 bis 198 nm oder von 198 bis 202 nm oder von 202 bis 207 nm oder von 207 bis 210 nm oder von 210 bis 215 nm durchlässt und die übrige Strahlung ausblendet. Insbesondere weist der erste optische Filter 35.1 eine Durchlassbereich von 190 bis 200 nm oder von 214 bis 216 nm oder von 225 bis 230 nm auf. Hierzu ist in Figur 5(d) das Absorptionsspektrum von Ammoniak NH₃ dargestellt. Es ist ersichtlich, dass NH₃ in diesen Bereichen ausgeprägte Absorptionsbanden aufweist. Durch die Wahl des ersten optischen Filters 35.1 mit einem solchen geeigneten Durchlassbereich wird somit die erste Detektionseinheit 34.1 ausgebildet, spezifisch Stickstoffmonoxid NH₃ zu detektieren.

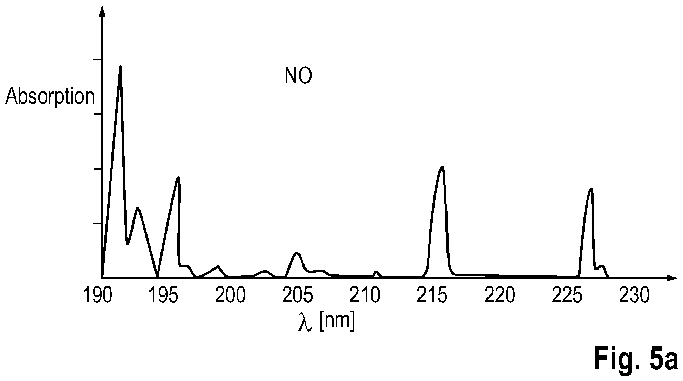

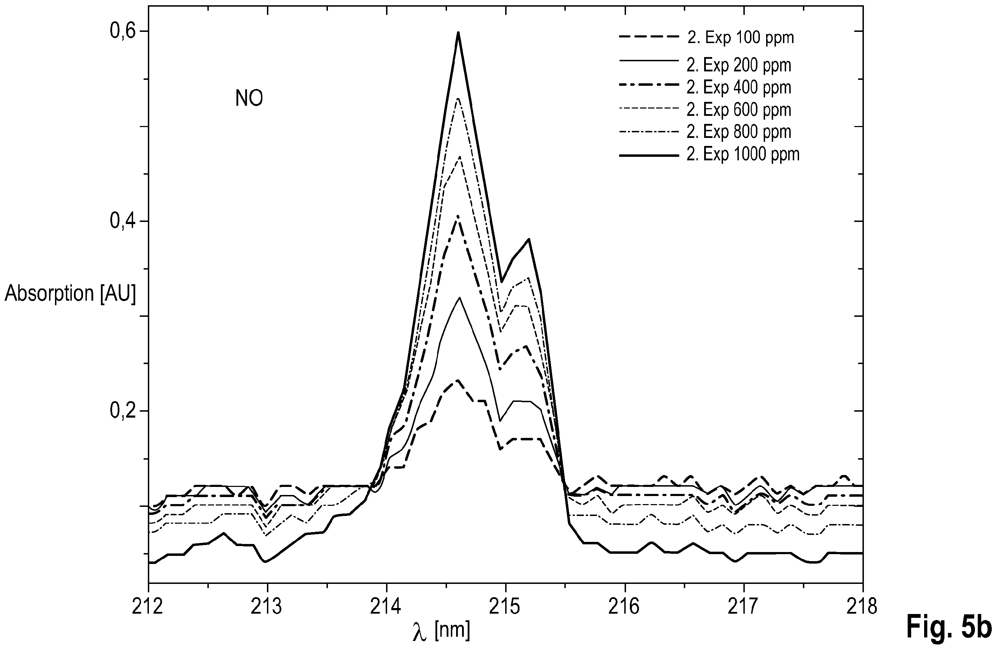

Im dargestellten Beispiel ist ferner der zweiten Detektionseinheit 34.2 ein zweiter optischer Filter 35.2 zugeordnet. Der zweite Filter 35.2 ist ebenfalls als Interferenzfilter ausgebildet und lässt im dargestellten Beispiel einen Spektralbereich von beispielsweise 188 bis 192 nm oder von 193 bis 197 nm oder von 202 bis 206 nm oder von 212 bis 216 nm oder von 223 bis 229 nm durch, wo Stickstoffoxid NO eine starke Absorptionsbande aufweist (vergleiche Figur 5(a) und 5(b)). Auf diese Weise spricht die zweite Detektionseinheit 34.2 spezifisch auf NO an.

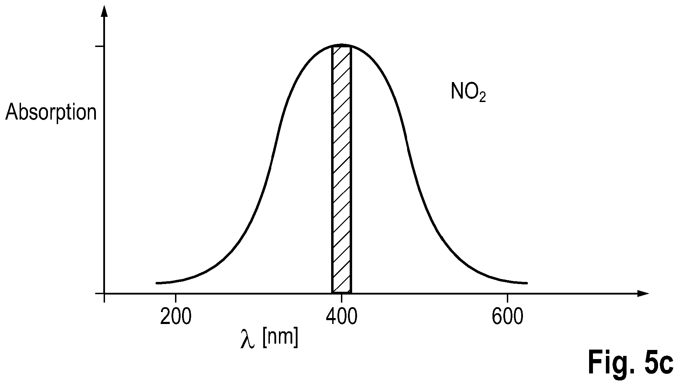

Im dargestellten Beispiel ist ferner der dritten Detektionseinheit 34.3 ein dritter optischer Filter 35.3 zugeordnet. Der dritte Filter 35.3 ist ebenfalls als Interferenzfilter ausgebildet und lässt im dargestellten Beispiel einen Spektralbereich von beispielsweise 390 bis 410 nm durch, wo Stickstoffdioxid NO₂ eine starke Absorptionsbande aufweist (vergleiche Figur 5(c)). Auf diese Weise spricht die dritte Detektionseinheit 34.3 spezifisch auf NO₂ an.

Ferner ist eine vierte Detektionseinheit 34.4 vorhanden, der jedoch kein optischer Filter vorgeschaltet ist. Die vierte Detektionseinheit 34.4 fungiert somit als Referenz, um Schwankungen der Strahlungsintensität der von der Lichtquelle 31 emittierten Strahlung zu kompensieren.

Schließlich weist der Sensor 10 eine elektronische Steuer- und Auswerteeinheit 40 auf, welche der Steuerung der Lichtquelle 31 sowie der Auswertung der elektrischen Signale der Detektionseinheiten 34 dient. Insbesondere ist die Steuer- und Auswerteeinheit 40 ausgebildet, um die Konzentration der Gaskomponenten NH₃, NO und NO₂ in Abhängigkeit von den elektrischen Signalen der Detektionseinheiten 34.1, 34.2 und 34.3 zu ermitteln.

Der optischen Sensor 10 weist gemäß dem dargestellten Ausführungsbeispiel ferner eine strömungstechnisch der Kapillare 21 vorgeschaltete Gaskonditionierungseinheit 50 auf, die im Rahmen von Figur 6 erläutert wird.

Nachfolgend werden anhand der Figuren 2a bis 2c und 3 nicht erfindungsgemäße Ausführungen der Kapillare 21 beschreiben, die in dem Sensor 10 gemäß Figur 1 eingesetzt werden können. Sämtliche der Kapillaren 21 der Figuren 2a bis 2c sind als längliche rohrförmige Hohlkörper ausgebildet, die spiralförmig gewickelt sind.

Die in Figur 2a gezeigte Mikrokapillare 21 weist eine Kapillarwand 21.1 auf, welche einen Hohlraum 21.2 umschließt. Die Kapillarwand 21.1 kann prinzipiell aus beliebigen, vorzugsweise dielektrischen Materialien umfassend Metalle, Gläser, insbesondere Quarzglas, Kunststoffe, Keramiken etc. bestehen. In bevorzugten Ausführungen ist die Kapillarwand aus einem faseroptischen Material, insbesondere Glasfasern, ausgebildet. Auf der Innenseite der Kapillarwand 21.1 ist gemäß dem dargestellten Beispiel eine reflektierende Oberfläche 21.3 dem Hohlraum 21.2 zugewandt ausgebildet. Die reflektierende Oberfläche 21.3 kann in Form einer auf die Innenseite der Kapillarwand 21.3 aufgebrachten reflektierenden Beschichtung ausgebildet sein und vorzugsweise eine Rauheit aufweisen, die kleiner als die halbe Wellenlänge der verwendeten elektromagnetischen Strahlung ist. Beispielsweise kann eine solche reflektierende Oberfläche durch Aufdampfen eines metallischen Films hergestellt werden. Optional kann die Kapillare 21 eine außen befindliche Kunststoffschicht 21.4 besitzen. Hierbei handelt es sich um eine Schicht, die aus einem Kunststoff, insbesondere einem Polyimide gebildet wird. Ihr Zweck liegt darin, die Oberflächen der Kapillare vor Feuchtigkeit, Abrieb und anderen mechanische Beanspruchungen zu schützen. Sie besitzt weiterhin eine hohe Hitzebeständigkeit sowie chemische Beständigkeit. Beides kann insbesondere bei Einsatz des Sensors für Abgasmessungen sinnvoll sein. Die Dicke der Kunststoffschicht liegt bevorzugt im Bereich von Mikrometern, beispielsweise 20 µm bis 50 µm. Die in Figur 2a gezeigte Kapillare wird auch als "Hollow Glass Waveguide" bezeichnet. Alternativ kann die Kapillarwand 21.1 selbst aus einem Material bestehen, das die verwendete elektromagnetische Strahlung reflektiert (s. Figur 2c). In alternativer, in Figur 2b dargestellter Ausführung, ist die reflektierende Oberfläche auf der Außenseite des Kapillarwand 21.1 angeordnet, wobei auch hier die reflektierende Oberfläche dem Hohlraum 21.2. zugewandt ist. In noch weiteren Ausführungen ist die Kapillare 21 in Form einer "Light Guiding Capillare" ausgebildet. In diesem Fall ist sie aus einem für die verwendete Strahlung transparenten Material, beispielsweise Quarzglas, gebildet und auf der Außenfläche ein Mantel beziehungsweise eine Beschichtung aus einem Material mit einem kleineren Brechungsindex als das Kapillarmaterial angeordnet, beispielsweise Tetrafluoroethylen. In noch weiteren Ausführungen hat die Kapillare 21 die Form einer sogenannten "Hollow Core Photonic Bandgap Fiber".

Die Länge der (gestreckten, nicht gewickelten) Kapillare 21 kann im Bereich von 5 cm bis 100 cm, bevorzugt 10 cm bis 80 cm liegen. Im Falle der Ausführung des Sensors im beschriebenen Reflexionsmodus verdoppelt sich der zurückgelegte Weg der Strahlung und somit der Messstrecke, da optische Ein- und Auskopplungsstelle sich am selben Ende befinden. Der Außendurchmesser liegt bevorzugt im Bereich von Mikro- bis Millimetern, beispielsweise 400 µm bis 1100 µm. Der lichte Innendurchmesser, also der Durchmesser des Hohlraums, liegt ebenfalls typischerweise im Bereich von Mikro- bis Millimetern, beispielsweise 100 µm bis 1000 µm, insbesondere von 200 µm bis 900 µm.

In Figur 2b wird eine alternative Ausführungsform der Kapillare gezeigt. Ihre Abmessungen (Länge, Außendurchmesser, lichter Durchmesser) entsprechen der in Figur 2a dargestellten Kapillare. Gemäß der hier gezeigte Ausführungsform befindet sich die reflektiere Oberflächenschicht 21.3 an der Außenseite der Kapillarwand. Dementsprechend ist die Kapillarwand 21.1 aus einem optisch durchlässigen Material, insbesondere Gläsern, gebildet. Ebenso wie in Figur 2a kann die Kapillare nach Figur 2b eine äußere Kunststoffbeschichtung 21.4 besitzen.

Eine weitere Ausführung der Kapillare zeigt Figur 2c. In diesem Beispiel besteht die Kapillarwand 21.1 selbst aus einem Material, das die verwendete elektromagnetische Strahlung reflektiert. Ein hierfür in Betracht kommendes Material ist unter anderem ein Metall, beispielsweise rostfreier Stahl (316L, 174 PH und weitere). Weiterhin besteht die Möglichkeit einer für die verwendete Strahlung durchlässigen Beschichtung 21.3 an der Innenfläche der metallischen Kapillarwand 21.1. Diese Beschichtung 21.3 kann beispielsweise aus Glas, Siliziumdioxid (SiOz) oder Aluminiumoxid (Al₂O₃) bestehen. Die Beschichtung 21.3 dient als Schutz vor Oberflächenveränderungen der metallischen Kapillarwand 21.1 und weist eine Dicke im Bereich von 80 nm bis 200 nm auf. Die weiteren Abmessungen (Länge, Außendurchmesser, lichter Durchmesser) entsprechen der in Figur 2a dargestellten Kapillare.

Figur 3 zeigt eine erfindungsgemäße Ausführungsform einer Kapillare 21. Die Kapillare 21 wird

durch ein kompaktes Bauteil 22, hier in zylindrischer Form, gebildet und besitzt einen Hohlraum 21.2 in Form eines Kanals, der spiralförmig das Bauteil 22 durchsetzt. Die Kapillarwand 21.1 wird in diesem Beispiel durch die Wandung des spiralförmigen Kanals gebildet. Das Bauteil 22 weist Öffnungen 23 und 24 auf, die als Gaseinlass 23.1 und Gasauslass 24.1 sowie als Ein- bzw. Auskopplungsstelle 23.2, 23.3 für die Strahlung entsprechend Figur 1 dienen. Das Bauteil 22 kann grundsätzlich aus den Materialien gefertigt sein, die im Zusammenhang mit den Kapillaren gemäß den Figuren 2a bis 2c besprochen wurden. Zur Herstellung einer solchen Kapillare aus Metall eignen sich beispielsweise Metallspritzguss-Verfahren. Dabei wird ein spiralförmig auf einem Kernstück aufgewickelter Polymerdraht mittels Metal Injection Molding mit einem Metall umspritzt, sodass die gewünschte äußere Form des Bauteils, beispielsweise eine zylindrische Form, erhalten wird. Beim darauffolgenden Sintern zersetzt sich der Polymerdraht thermisch und es bleibt der spiralförmige Hohlraum. Alternativ können auch additive Fertigungsverfahren beispielsweise 3D-Druck, Laserschmelzverfahren etc., zur Herstellung angewendet werden. Auf diese Weise gefertigte Kapillaren bzw. das zylindrische Bauteile weisen Maße auf, deren Bereich bezüglich des Außendurchmessers zwischen 18 und 30 mm und bezüglich der Höhe zwischen 20 und 100 mm liegt. Die weiteren Abmessungen (Länge des Kanals, lichter Durchmesser) entsprechen der in Figur 2a dargestellten Kapillare.

Der optische Sensor 10 aus Figur 1 weist folgende Funktionsweise auf. Das zu vermessende Gas oder Gasgemisch wird über den Gaseinlass 23.1 in den Hohlraum 21.2 der Kapillare 21 geleitet. Dabei kann eine kontinuierliche Durchleitung erfolgen, wobei das Gas kontinuierlich aus dem Gasauslass 24.1 abgeführt wird. Alternativ kann die Kapillare 21 in einem diskontinuierlichen Verfahren chargenweise mit dem Gas beschickt werden. Die von der Lichtquelle 31 emittierte Strahlung wird über den ersten Lichtleiter 32.1 der optischen Einkopplungsstelle 23.2 zugeleitet, wo die Strahlung in den Hohlraum 21.2 der Kapillare 21 eingekoppelt wird. Die Strahlung durchläuft die gesamte Länge der Kapillare 21, wobei die reflektierende Oberfläche 21.3 einen Austritt aus der Kapillare verhindert. Am Ende der Kapillare 21 trifft die Strahlung auf den Spiegel 25, der die Strahlung reflektiert, sodass sie die Kapillare 21 nun in umgekehrter Richtung durchläuft, um an der optischen Auskopplungsstelle 23.2 aus der Kapillare ausgekoppelt zu werden. Während der Durchströmung der Kapillare 21 kommt es zur Interaktion der elektromagnetischen Strahlung mit den dort befindlichen Gasmolekülen. Insbesondere werden Valenzelektronen der Gasmoleküle auf höhere Energieniveaus angeregt, wodurch es zu einer Absorption von Strahlungsenergie im Bereich der spezifischen Absorptionsbanden der vorhandenen Gasmoleküle kommt. Die aus der Kapillare 21 ausgekoppelte elektromagnetische Strahlung durchläuft den ersten Lichtleiter 32.1 und wird über den 2x1-Koppler 33.1 in den zweiten Lichtleiter 32.2 eingekoppelt. Über den 1x4-Koppler 33.2 wird der zweite Lichtleiter 32.2 in die vier parallelen Zweige geteilt, sodass die elektromagnetische Strahlung auf die vier Detektionseinheiten 34.1, 34.2, 34.3 und 34.4 trifft. Dabei gelangt aufgrund des ersten optischen Filters 35.1 nur Strahlung der vorstehend genannten, für Ammoniak NH₃ charakteristischen Durchlassbereiche zur Detektionseinheit 34.1. Auf der anderen Seite gelangt aufgrund des zweiten optischen Filters 35.2 nur Strahlung der vorstehend genannten, für Stickoxid NO charakteristischen Durchlassbereiche zur zweiten Detektionseinheit 34.2. Auf der anderen Seite gelangt aufgrund des dritten optischen Filters 35.3 nur Strahlung des vorstehend genannten, für Stickstoffdioxid NO₂ charakteristischen Durchlassbereichs zur dritten Detektionseinheit 34.3. Hingegen empfängt die vierte Detektionseinheit 34.4 den gesamten Spektralbereich. Die Steuer- und Auswerteeinheit 40 vergleicht die mit der ersten Detektionseinheit 34.1 gemessene Intensität mit einer (in Abhängigkeit von der mit dem Referenzdetektor 34.4 gemessenen Intensität) gespeicherten Intensität, die charakteristisch für die Abwesenheit von Ammoniak NH₃ ist. Sofern Ammoniak im Messgas vorhanden ist, findet eine Absorption in dem entsprechenden Spektralbereich statt, sodass eine vergleichsweise niedrige Intensität durch die erste Detektionseinheit 34.1 gemessen wird. Hieraus ermittelt die Einheit 40 die in dem Messgas vorhandene Konzentration an NH₃, beispielsweise in ppm. In entsprechender Funktionsweise wird über das Signal der zweiten bzw. dritten Detektionseinheiten 34.1 bzw. 34.3 die Konzentrationen von NO bzw. NO₂ ermittelt.

Es versteht sich, dass der erfindungsgemäße optische Sensor nicht auf die Bestimmung von NH₃, NO und NO₂ beschränkt ist. Durch Auswahl der optischen Filter 35 können auch andere Gaskomponenten beispielsweise CO₂, CO, N₂O, N₂O₅, SO₂, Ar, H₂, O₂, CH₄ und andere Kohlenwasserstoffe HC je nach Anwendung ermittelt werden. Auch ist der optische Sensor grundsätzlich geeignet, eine beliebige Anzahl von Gaskomponenten nebeneinander nachzuweisen. Demzufolge ist der Einsatz der erfindungsgemäßen Messvorrichtung nicht auf den Bereich der Verbrennungskraftmaschinen eingeschränkt. Vielmehr kann sie in einer Vielzahl unterschiedlicher Anwendungsgebiete Verwendung finden, wie die Gastinnenraumüberwachung unterschiedlicher Fortbewegungsmittel, die Verwendung in prozess- und verfahrenstechnischen Industrieanlagen, in Gebäuden diverser Nutzungstypen und weiteren Einsatzgebieten, in denen die Messung der Beschaffenheit eines Gases notwendig ist oder verlangt wird.

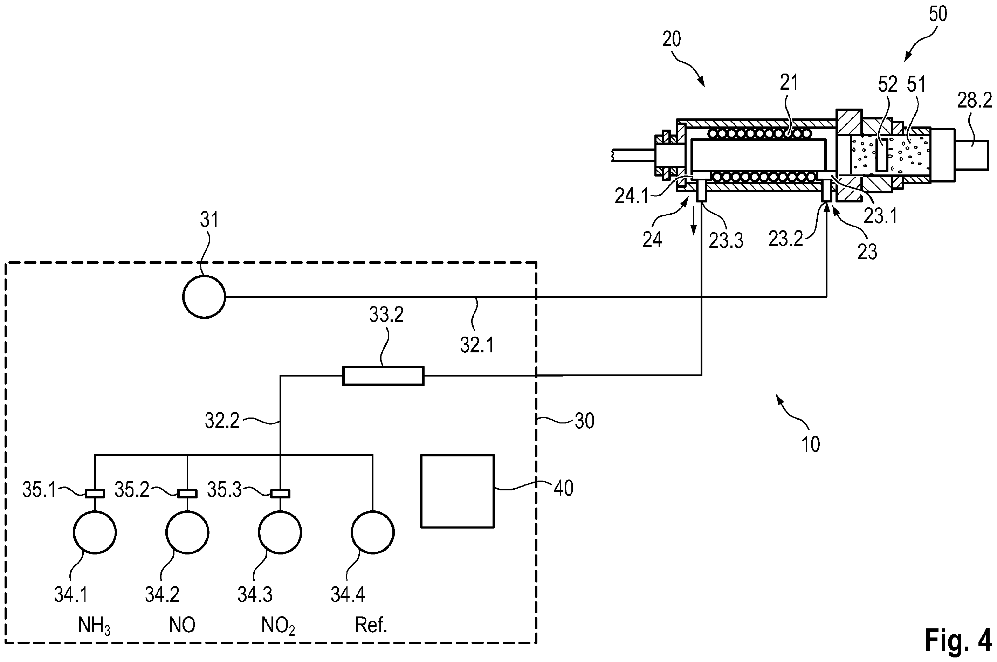

Figur 4 zeigt eine Prinzipdarstellung eines optischen Sensors gemäß einer alternativen Ausführung der vorliegenden Erfindung (Transmissionsmodus). Komponenten, die denen der Figur 1 entsprechen, sind mit übereinstimmenden Bezugszeichen bezeichnet und werden nicht nochmals erläutert.

Der wichtigste Unterschied zu der Ausführungsform von Figur 1 ist, dass die Kapillare 21 keinen Spiegel 25 aufweist. Stattdessen weist das zweite Anschlusselement 24 zusätzlich zum Gasauslass 24.1 nun eine optische Auskopplungsstelle 23.3 mit einem eigenen Lichtleiter 32.2 auf, sodass die optischen Ein- und Auskopplungsstellen separat an gegenüberliegenden Enden der Kapillare 21 ausgeführt sind. Dementsprechend entfällt der 2x1-Koppler 33.1 der optoelektronischen Einheit 30 aus Figur 1 aufgrund der Ausführung im Transmissionsmodus. Ferner unterscheidet sich die Ausführung gemäß Figur 4 von der aus Figur 1, indem die Gaskonditionierungseinheit 50 in der Messzelle 20 des Sensors 10 integriert ist.

Es ist ersichtlich, dass die grundlegende Funktionsweise des Sensors 10 von Figur 4 derjenigen gemäß Figur 1 prinzipiell gleicht.

Figur 6 zeigt einen erfindungsgemäßen optischen Sensor 10, der als zentrale Komponente die Messzelle 20 und die mit dieser über einen Lichtleiter 32 verbundene optoelektronische Einheit 30 beispielsweise gemäß den Figuren 1 oder 4 aufweist.

Der optische Sensor 10 weist neben der Messzelle 20 und der optoelektronischen Einheit 30 eine Gaskonditionierungseinheit 50 auf, die dem Sensor 10 in Strömungsrichtung des zu vermessenden Gases strömungstechnisch vorgeschaltet ist. Die Gaskonditionierungseinheit 50 dient im Wesentlichen der Vorreinigung des der Kapillare 23 zugeführten Gases. Dabei weist die Einheit 50 im dargestellten Beispiel ein vom Gas durchströmbares Reinigungselement 51, insbesondere einen Filter auf, der partikuläre Bestandteile zurückhält. Das so gefilterte Gas trifft dann auf ein Heizelement 52, durch welches eine Entzündung und Verbrennung (Abfackelung) bestimmter Gaskomponenten erfolgt. Von dort strömt das so vorgereinigte Gas in die Messzelle 20 und insbesondere in die zuvor beschriebene Kapillare 21. Dort findet in der zuvor beschriebenen Vorgehensweise die spektroskopische Auswertung statt. Wie bereits erwähnt, kann dieses in einer kontinuierlichen Vorgehensweise erfolgen, bei welcher das Gas kontinuierlich durch die Messzelle 20 geleitet und vermessen wird. Alternativ erfolgt gemäß einem diskontinuierlichen Ansatz eine chargenweise Befüllung und Vermessung des Gases. Nach Austritt aus der Messzelle 20 strömt das Gas in einen Ausgangsbereich, von wo es über eine Abfuhrleitung aus dem Sensor 10 entlassen wird.

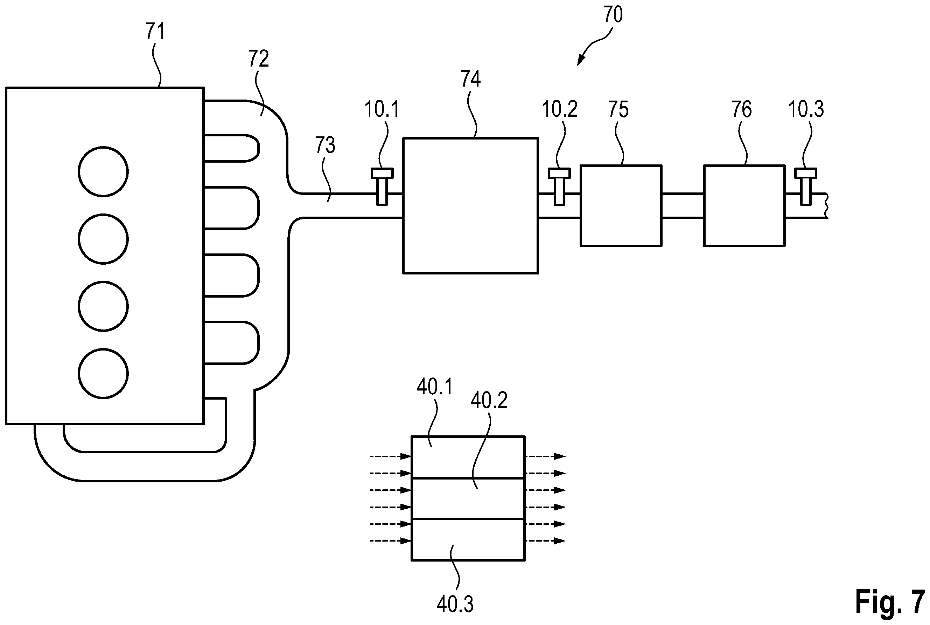

In Figur 7 ist eine bevorzugte Anwendung des erfindungsgemäßen Sensors 10 dargestellt, nämlich in einem Abgastrakt eines Fortbewegungsmittels 70. Das Fortbewegungsmittels 70 umfasst einen Verbrennungsmotor 71, bei dem es sich im vorliegenden Beispiel um einen Dieselmotor handelt. Ein von dem Verbrennungsmotor 71 erzeugtes Abgas gelangt über einen Abgaskrümmer 72 in einen Abgaskanal 73. In diesem sind verschiedene Abgasreinigungskomponenten zur Reinigung des verbrennungsmotorischen Abgases angeordnet. Diese umfassen im gezeigten Beispiel einen Oxidationskatalysator 34, der eine Oxidation von unverbrannten Kohlenwasserstoffen HC sowie von Kohlenmonoxid CO vornimmt. Ein nachgeschalteter Dieselpartikelfilter 75 hält partikuläre Bestandteile, insbesondere Ruß, mechanisch zurück. Dem Partikelfilter 75 ist ein SCR-Katalysator 76 nachgeschaltet, der in an sich bekannter Weise eine selektive katalytische Reduktion von Stickoxiden NOₓ vornimmt. Stromauf des Oxidationskatalysators 74 ist ein erster optischer Sensor 10.1 gemäß der vorliegenden Erfindung angeordnet. Dieser ist beispielsweise ausgebildet, um die Gaskomponenten CO, NO, NO₂, CH₄ und O₂ zu detektieren und mengenmäßig zu bestimmen. Stromab des Oxidationskatalysators 74 ist ein zweiter optischer Sensor 10.2 angeordnet, der die gleichen Komponenten wie der Sensor 10.1 detektiert, insbesondere aber CO und CH₄, um die Performance des Oxidationskatalysators 74 zu überwachen. Schließlich ist stromab des SCR-Katalysators 76 ein weiterer optischer Sensor 10.3 angeordnet, der insbesondere zur Detektion von verschiedenen Stickoxiden wie NO und NO₂ sowie von Ammoniak NH₃ ausgebildet ist.

Die Steuerung und Auswertung der Sensoren 10.1, 10.2 und 10.3 erfolgt wiederum über elektronische Steuer- und Auswerteeinheiten 40. Gemäß der gezeigten Ausführung weist jeder der Sensoren eine eigene Steuer- und Auswerteeinheit auf. Dabei ist die Steuereinheit 40.1 dem ersten Sensor 10.1 zugeordnet, die zweite Steuereinheit 40.2 dem zweiten Sensor 10.2 und die dritte Steuereinheit 40.3 dem dritten Sensor 10.3. Gemäß einer nicht gezeigten Alternative steuert ein einziges Multiplex-Steuergerät 40 sämtliche der vorhandenen Sensoren.

Es sei darauf hingewiesen, dass der erfindungsgemäße Sensor 10 nicht nur in einem Fahrzeug eingesetzt werden kann, sondern in beliebigen Einsatzbereichen, in denen eine qualitative und/oder quantitative Detektion von Gasen erforderlich ist. Mögliche Einsatzgebiete sind beispielsweise die Messung von Gasanteilen in Klimakompressoren, die Messung von unerwünschten Gasaustritten aus Batteriemodulen, die Messung von Gasen, beispielsweise CO in einem Fahrzeuginnenraum, Einsätze in Flugzeugen, Hubschraubern, Verbrennungsindustrieanlagen, Biogasanlagen oder Tankstellen.

Der erfindungsgemäße Sensor 10 zeichnet sich durch folgende vorteilhafte Eigenschaften aus:
- Hohe Widerstandsfähigkeit in problematischen Umgebungen,
- Eignung zur Messung einer Vielzahl verschiedener Gaskomponenten auch nebeneinander,
- Hohe Empfindlichkeit,
- Kurze Ansprechzeiten,
- Niedrige Kosten,
- Direkte Messmethode,
- Hohe Zuverlässigkeit (keine Beeinflussung durch Funkenbildung, Kurzschluss, EMI-, RF- und HV-Störungen),
- Kompakte und einfache Bauweise.

### Bezugszeichenliste

- 10: Sensor
- 10.1: erster Gassensor
- 10.2: zweiter Gassensor
- 10.3: dritter Gassensor
- 20: Messzelle
- 21: Kapillare
- 21.1: Kapillarwand
- 21.2: Hohlraum
- 21.3: reflektierende Oberfläche / reflektierende Beschichtung
- 22: Trägerkern
- 23: erstes Anschlusselement / T-Stück
- 23.1: Gaseinlass
- 23.2: optische Einkopplungsstelle
- 23.3: optische Auskopplungsstelle
- 24: zweites Anschlusselement / T-Stück
- 24.1: Gasauslass
- 25: Spiegel
- 30: optoelektronische Einheit
- 31: Lichtquelle
- 32.1: erster Lichtleiter / Glasfaser
- 32.2: zweiter Lichtleiter / Glasfaser
- 33.1: 2x1-Koppler
- 33.2: 1x4-Koppler
- 34.1: erste Detektionseinheit / erste Fotodiode
- 34.2: zweite Detektionseinheit / zweite Fotodiode
- 34.3: dritte Detektionseinheit / dritte Fotodiode
- 34.4: vierte Detektionseinheit / vierte Fotodiode
- 35.1: erster optischer Filter / erster Interferenzfilter
- 35.2: zweiter optischer Filter / zweiter Interferenzfilter
- 35.3: dritter optischer Filter / dritter Interferenzfilter
- 40: elektronische Steuer- und Auswerteeinheit
- 50: Gaskonditionierungseinheit
- 51: Reinigungselement / Filter
- 52: Heizelement
- 60: Ausgangsbereich
- 70: Fahrzeug
- 71: Verbrennungsmotor
- 72: Abgaskrümmer
- 73: Abgaskanal
- 74: Oxidationskatalysator
- 75: Dieselpartikelfilter
- 76: SCR-Katalysator

## Patentansprüche

1. Sensor (10) zur Detektion eines Gases, umfassend:
eine spiralförmige Kapillare (21) mit einer Kapillarwand (21.1) und mit einem Hohlraum (21.2), wobei die Kapillarwand (21.1) ausgebildet ist, ein Austreten von elektromagnetischer Strahlung zu unterdrücken,
einen an einem ersten Ende der Kapillare (21) angeordneten Gaseinlass (23.1) und einen an einem zweiten Ende der Kapillare (21) angeordneten Gasauslass (24.1), sodass der Hohlraum (21.2) mit dem zu messenden Gas befüllbar und/oder von einem solchen durchströmbar ist, und
eine optische Einkopplungsstelle (23.2), die ausgebildet ist, eine elektromagnetische Strahlung in den Hohlraum (21.2) der Kapillare (21) einzukoppeln, und eine optische Auskopplungsstelle (23.3), die ausgebildet ist, die elektromagnetische Strahlung aus der Kapillare (21) auszukoppeln, wobei die Einkopplungsstelle (23.2) und die Auskopplungsstelle (23.3) gemeinsam an dem ersten oder zweiten Ende der Kapillare (21) oder separat voneinander an den gegenüberliegenden Enden der Kapillare (21) ausgebildet sind,
wobei die Kapillare (21) durch einen ein kompaktes Bauteil durchsetzenden, spiralförmig verlaufenden Kanal gebildet ist und wobei das Bauteil integral einstückig ausgebildet ist.

2. Sensor (10) nach Anspruch 1, ferner umfassend eine Gaskonditionierungseinheit (50) zur Vorreinigung des der Kapillare (21) zuzuführenden Gases.

3. Sensor (10) nach Anspruch 1 oder 2, wobei die Kapillare eine auf einer Innenseite oder Außenseite der Kapillarwand (21.1) angeordnete reflektierende Oberfläche (21.3) aufweist, die dem Hohlraum (21.2) zugewandt ist.

4. Sensor (10) nach Anspruch 3, wobei die reflektierende Oberfläche (21.3) als eine spiegelnde Oberfläche, insbesondere ein metallischer Film, ausgebildet ist.

5. Sensor (10) nach Anspruch 3, wobei die Kapillarwand (21.1) aus einem strahlungsdurchlässigen Material besteht und die reflektierende Oberfläche (21.3) eine auf der Außenseite der Kapillarwand (21.1) angeordnete Schicht eines Materials mit einem Brechungsindex, der kleiner ist als der des Materials der Kapillarwand (21.1), ist.

6. Sensor (10) nach einem der vorhergehenden Ansprüche, wobei die Einkopplungsstelle (23.2) und die Auskopplungsstelle (23.3) gemeinsam an dem ersten oder zweiten Ende der Kapillare (21) ausgebildet sind und an dem der Einkopplungsstelle (23.2) und Auskopplungsstelle (23.3) gegenüberliegenden Ende der Kapillare (21) ein Spiegel (25) angeordnet ist, der die auftreffende elektromagnetische Strahlung in Richtung der Einkopplungsstelle (23.2) reflektiert.

7. Sensor (10) nach einem der vorhergehenden Ansprüche, ferner umfassend eine Lichtquelle (31) zur Emission der elektromagnetischen Strahlung, die über einen Lichtleiter (32) mit der optischen Einkopplungsstelle (23.2) verbunden ist.

8. Sensor (10) nach Anspruch 7, wobei die Lichtquelle (31) eine polychromatische Lichtquelle zur Emission von elektromagnetischer Strahlung ist, deren Spektrum im ultravioletten und/oder visuellen Bereich liegt.

9. Sensor (10) nach einem der vorhergehenden Ansprüche, ferner umfassend zumindest eine für die elektromagnetische Strahlung empfindliche Detektionseinheit (34), insbesondere Fotodiode, zur Umwandlung der elektromagnetischen Strahlung in ein elektrisches Signal, wobei die Detektionseinheit (34) über einen Lichtleiter (32) mit der optischen Auskopplungsstelle (23.3) verbunden ist.

10. Sensor (10) nach Anspruch 9, ferner umfassend einen zwischen der optischen Auskopplungsstelle (23.3) und der Detektionseinheit (34) angeordneten optischen Filter (35), insbesondere Interferenzfilter, der ausgebildet ist, einen vorbestimmten spektralen Bereich selektiv passieren zu lassen.

11. Sensor (10) nach Anspruch 9 und 10, umfassend eine Mehrzahl von Detektionseinheiten (34.1, 34.2) mit jeweils einem vorgeschalten optischen Filter (35.1, 35.2), wobei die optischen Filter (35.1, 35.2) ausgebildet sind, unterschiedliche vorbestimmte spektrale Bereiche selektiv passieren zu lassen.

12. Verwendung des Sensors (10) nach einem der Ansprüche 1 bis 11 in einem Fortbewegungsmittel (70), insbesondere in einem Abgastrakt und/oder einem Innenraum und/oder einem Brennstoffzellensystem des Fortbewegungsmittels.

13. Fortbewegungsmittel (70) umfassend mindestens einen Sensor (10) nach einem der Ansprüche 1 bis 11, wobei der mindestens eine Sensor (10) in einem Abgastrakt und/oder einem Innenraum und/oder einem Brennstoffzellensystem des Fortbewegungsmittels angeordnet ist.

14. Fortbewegungsmittel (70) mit einem Verbrennungsmotor (71), einer daran angeschlossenen Abgasanalage mit einem Abgaskanal (73) und mindestens einer darin angeordneten Abgasreinigungskomponente (74, 75, 76), wobei in dem Abgaskanal (73) mindestens ein Sensor (10) nach einem der Ansprüche 1 bis 11 in dem Abgas des Verbrennungsmotors (71) angeordnet ist.

## Claims

1. Sensor (10) for detecting a gas, comprising:
a spiral capillary (21) having a capillary wall (21.1) and having a cavity (21.2), wherein the capillary wall (21.1) is configured to suppress the escape of electromagnetic radiation,
a gas inlet (23.1) arranged at a first end of the capillary (21) and a gas outlet (24.1) arranged at a second end of the capillary (21), so that the cavity (21.2) is fillable with the gas to be measured and/or the gas to be measured is flowable through the cavity, and
an optical incoupling site (23.2), which is configured to incouple electromagnetic radiation into the cavity (21.2) of the capillary (21), and an optical outcoupling site (23.3), which is configured to outcouple the electromagnetic radiation from the capillary (21), wherein the incoupling site (23.2) and the outcoupling site (23.3) are formed together at the first or second end of the capillary (21) or separately from each other at the opposite ends of the capillary (21),
wherein the capillary (21) is formed by a spirally extending channel running through a compact component and wherein the component is integrally formed in one piece.

2. Sensor (10) according to Claim 1, further comprising a gas conditioning unit (50) for pre-cleaning the gas to be supplied to the capillary (21).

3. Sensor (10) according to Claim 1 or 2, wherein the capillary has a reflective surface (21.3), which is arranged on an inside or outside of the capillary wall (21.1) and which is facing the cavity (21.2).

4. Sensor (10) according to Claim 3, wherein the reflective surface (21.3) is a reflecting surface, in particular a metallic film.

5. Sensor (10) according to Claim 3, wherein the capillary wall (21.1) consists of a radiation-transmissive material and the reflective surface (21.3) is a layer of a material having a refractive index that is smaller than that of the material of the capillary wall (21.1), with the layer being arranged on the outside of the capillary wall (21.1).

6. Sensor (10) according to any of the preceding claims, wherein the incoupling site (23.2) and the outcoupling site (23.3) are formed together at the first or second end of the capillary (21) and a mirror (25) reflecting the incident electromagnetic radiation in the direction of the incoupling site (23.2) is arranged at the end of the capillary (21) opposite the incoupling site (23.2) and outcoupling site (23.3).

7. Sensor (10) according to any of the preceding claims, further comprising a light source (31) for emitting the electromagnetic radiation, which is connected to the optical incoupling site (23.2) via a light guide (32).

8. Sensor (10) according to Claim 7, wherein the light source (31) is a polychromatic light source for emitting electromagnetic radiation, the spectrum of which is in the ultraviolet and/or visual range.

9. Sensor (10) according to any of the preceding claims, further comprising at least one detection unit (34), in particular photodiode, sensitive to the electromagnetic radiation for converting the electromagnetic radiation into an electrical signal, wherein the detection unit (34) is connected to the optical outcoupling site (23.3) via a light guide (32).

10. Sensor (10) according to Claim 9, further comprising an optical filter (35), in particular interference filter, which is arranged between the optical outcoupling site (23.3) and the detection unit (34) and which is configured to allow a predetermined spectral range to selectively pass through.

11. Sensor (10) according to Claims 9 and 10, comprising a plurality of detection units (34.1, 34.2) each having an upstream optical filter (35.1, 35.2), wherein the optical filters (35.1, 35.2) are configured to allow different predetermined spectral ranges to selectively pass through.

12. Use of the sensor (10) according to any of Claims 1 to 11 in a means of transportation (70), in particular in an exhaust tract and/or an interior and/or a fuel cell system of the means of transportation.

13. Means of transportation (70) comprising at least one sensor (10) according to any of Claims 1 to 11, wherein the at least one sensor (10) is arranged in an exhaust tract and/or an interior and/or a fuel cell system of the means of transportation.

14. Means of transportation (70) having an internal combustion engine (71), connected thereto an exhaust system with an exhaust gas duct (73) and arranged therein at least one exhaust gas cleaning component (74, 75, 76), wherein at least one sensor (10) according to any of Claims 1 to 11 is arranged in the exhaust gas duct (73) in the exhaust gas of the internal combustion engine (71) .

## Revendications

1. Capteur (10) pour la détection d'un gaz, comprenant :
un capillaire (21) en forme de spirale avec une paroi capillaire (21.1) et avec un espace creux (21.2), la paroi capillaire (21.1) étant conçue pour empêcher une fuite de rayonnement électromagnétique,
une entrée de gaz (23.1) agencée à une première extrémité du capillaire (21) et une sortie de gaz (24.1) agencée à une deuxième extrémité du capillaire (21), de sorte que l'espace creux (21.2) est apte à être rempli avec le gaz à mesurer et/ou être traversé par un tel gaz, et
un point d'injection optique (23.2), qui est conçu pour injecter un rayonnement électromagnétique dans la cavité (21.2) du capillaire (21), et un point de découplage optique (23.3), qui est conçu pour découpler le rayonnement électromagnétique du capillaire (21), le point d'injection (23.2) et le point de découplage (23.3) étant formés conjointement à la première ou à la deuxième extrémité du capillaire (21) ou séparément l'un de l'autre aux extrémités opposées du capillaire (21),
le capillaire (21) étant formé par un canal s'étendant en spirale et traversant un composant compact, et le composant étant réalisé d'une seule pièce.

2. Capteur (10) selon la revendication 1, comprenant en outre une unité de conditionnement de gaz (50) pour la purification préalable du gaz à amener au capillaire (21) .

3. Capteur (10) selon la revendication 1 ou la revendication 2, dans lequel le capillaire présente une surface réfléchissante (21.3) agencée sur une face interne ou externe de la paroi du capillaire (21.1), qui est tournée vers la cavité (21.2).

4. Capteur (10) selon la revendication 3, dans lequel la surface réfléchissante (21.3) est réalisée sous la forme d'une surface réfléchissante, notamment d'un film métallique.

5. Capteur (10) selon la revendication 3, dans lequel la paroi capillaire (21.1) est constituée d'un matériau transparent au rayonnement et la surface réfléchissante (21.3) est une couche, agencée sur la face extérieure de la paroi capillaire (21.1), d'un matériau présentant un indice de réfraction inférieur à celui du matériau de la paroi capillaire (21.1) .

6. Capteur (10) selon l'une des revendications précédentes, dans lequel le point d'injection (23.2) et le point de découplage (23.3) sont formés conjointement à la première ou à la deuxième extrémité du capillaire (21) et un miroir (25) est agencé à l'extrémité du capillaire (21) opposée au point d'injection (23.2) et au point de découplage (23.3), lequel réfléchit le rayonnement électromagnétique incident en direction du point d'injection (23.2).

7. Capteur (10) selon l'une des revendications précédentes, comprenant en outre une source de lumière (31) pour l'émission du rayonnement électromagnétique, qui est reliée au point d'injection optique (23.2) par un guide de lumière (32).

8. Capteur (10) selon la revendication 7, dans lequel la source de lumière (31) est une source de lumière polychromatique d'émission de rayonnement électromagnétique dont le spectre est dans l'ultraviolet et/ou le visuel.

9. Capteur (10) selon l'une des revendications précédentes, comprenant en outre au moins une unité de détection (34) sensible au rayonnement électromagnétique, notamment une photodiode, pour convertir le rayonnement électromagnétique en un signal électrique, l'unité de détection (34) étant reliée au point de découplage optique (23.3) par un guide de lumière (32).

10. Capteur (10) selon la revendication 9, comprenant en outre un filtre optique (35), notamment un filtre interférentiel, agencé entre le point de découplage optique (23.3) et l'unité de détection (34), qui est conçu pour laisser passer sélectivement une plage spectrale prédéterminée.

11. Capteur (10) selon les revendications 9 et 10, comprenant une pluralité d'unités de détection (34.1, 34.2) avec chacune un filtre optique (35.1, 35.2) monté en amont, les filtres optiques (35.1, 35.2) étant conçus pour laisser passer sélectivement différentes plages spectrales prédéterminées.

12. Utilisation du capteur (10) selon l'une des revendications 1 à 11 dans un moyen de locomotion (70), notamment dans un conduit d'échappement et/ou un espace intérieur et/ou un système de pile à combustible du moyen de locomotion.

13. Moyen de locomotion (70) comprenant au moins un capteur (10) selon l'une des revendications 1 à 11, ledit au moins un capteur (10) étant agencé dans un conduit d'échappement et/ou un espace intérieur et/ou un système de pile à combustible du moyen de locomotion.

14. Moyen de locomotion (70) comprenant un moteur à combustion interne (71), un système d'échappement raccordé à celui-ci et comprenant un conduit d'échappement (73) et au moins un composant de purification des gaz d'échappement (74, 75, 76) agencé dans celui-ci, au moins un capteur (10) selon l'une des revendications 1 à 11 étant agencé dans le conduit d'échappement (73) dans les gaz d'échappement du moteur à combustion interne (71).
